# EUROPÄISCHE PATENTSCHRIFT

(11) **EP 1 959 073 B1**
(45) Veröffentlichungstag und Bekanntmachung des Hinweises auf die Patenterteilung: **30.09.2009**
(21) Anmeldenummer: 08405010.3
(22) Anmeldetag: 15.01.2008
(51) Int. Cl.: E04H 9/04, E04H 9/06, E04H 9/10, F41H 5/04, B32B 3/02

(54) **Leichtbauelement zum Bau einer Wandverstärkung von bestehenden Objekten, sowie Wandverstärkung aus Leichtbauelementen**
Lightweight construction element for constructing a wall reinforcement out of existing objects, as well as wall reinforcement made from lightweight construction elements
Composant léger destiné à la construction d'un renforcement de mur à partir d'objets existants, ainsi que renforcement de mur en composants légers

(30) Priorität: 16.02.2007 CH 2642007
(43) Veröffentlichungstag der Anmeldung: 20.08.2008
(73) Patentinhaber: Nordostschweizerische Kraftwerke AG, 5312 Döttingen (CH)
(72) Erfinder: Schevelik, Csaba, 5400 Baden (CH); Anliker, Jürg, 3752 Wimmes (CH)
(74) Vertreter: Spierenburg, Pieter

(56) Entgegenhaltungen:
- EP-A- 0 215 652
- WO-A-20/06083391
- DE-A1- 3 740 716
- DE-A1- 4 005 904
- US-A- 3 948 347
- US-A- 5 915 528

## Beschreibung

Die Erfindung betrifft ein Leichtbauelement zum Bau einer Wandverstärkung von bestehenden Objekten, sowie eine Wandverstärkung hergestellt aus den Leichtbauelementen.

Es besteht ein erhöhtes Bedürfnis Objekte, wie beispielsweise Chemiewerke, Kraftwerke, Kernkraftwerke, aber auch technischen Anlagen gegen Explosions- und/oder Beschusslasten insbesondere im Hinblick auf die Abwehr terroristischer Angriffe mit Spreng- und Brandvorrichtungen oder sonstigen Waffen zu schützen. Beim Erstellen neuer Objekte werden entsprechende bauliche Massnahmen getroffen, die den heutigen Anforderungen gegen Anschläge standhalten. Diese Anforderungen besagen unter anderem, dass innerhalb einer bestimmten Widerstandszeit keine durchstiegsfähige Öffnung von etwa 350 mm Durchmesser erreicht werden kann, und dass Gebäudewände Angriffen mit handelsüblichen mechanischen Werkzeugen, thermischen Angriffsmitteln inklusive Sauerstofflanzen und Sprengstoff sowohl aufgelegt wie eingebracht standhalten. Auf Grund neuer Erkenntnisse und Vorgaben sollen auch bestehende Gebäudewände von sensitiven Objekten so verstärkt werden, dass sie den heutigen Anforderungen gegen unerlaubte Angriffe und Anschläge standhalten.
Die Veröffentlichung EP 0 215 652 A offenbart ein mehrschichtiges Bauelement, für Verkleidungen und Abschirmungen für beispielsweise Isolationen oder Brandschutz insbesondere als Ersatz für Asbest-Bauelemente. Diese mehrschichtigen Bauelemente sind aus verschiedenen Verbundwerkstoffen aufgebaut, können aber den heutigen, oben beschriebenen Anforderungen gegen Anschläge nicht standhalten. Das Leichtbauelement gemäß EP 0215652 A weist alle Merkmale des Oberbegriffs des Anspruchs 1 auf.

Der vorliegenden Erfindung liegt nun die Aufgabe zugrunde, eine Wandverstärkung für bestehende Objekte zu schaffen, die nachträglich an den Objekten anbringbar ist und die zusammen mit der zu verstärkende Gebäudehülle den Widerstandswert aus Sicht der heutigen Bedrohungslage terroristischer Angriffe und den daraus abgeleiteten, oben erwähnten Anforderungen erreicht.

Diese Aufgabe wird gelöst von einem Leichtbauelement zum Bau einer Gebäudewandverstärkung an bestehenden Objekten mit den Merkmalen des Patentanspruchs 1. Weiter wird diese Aufgabe gelöst von einer Gebäudewandverstärkung gebildet aus den Leichtbauelementen gemäss den kennzeichnenden Merkmalen des Patentanspruchs 8.

Das erfindungsgemässe Leichtbauelement zum Bau einer Gebäudewandverstärkung von bestehenden Gebäuden besteht aus einer geschlossenen Ummantelung aus einem witterungsbeständigen Material und einer sandwichartigen, schichtweise aufgebauten Füllung aus unterschiedlichen Materialien und Verbundwerkstoffen. Die Schichten sind etwa parallel zur Vorder-und Rückwand des Leichtbauelementes angeordnet. In die Seitenwände des Leichtbauelements sind Nuten eingelassen. Die erfindungsgemässe Gebäudewandverstärkung für ein bestehendes Objekt ist aus solchen Leichtbauelementen zusammengesetzt, die auf eine am Mauerwerk befestigte Tragkonstruktion bündig Element an Element montiert sind, und so eine geschlossene Wandabdeckung ergeben. Die Nuten zwischen den Leichtbauelementen sind mit schichtverleimtem Werkstoff und mit Stahlblech ausgefüllt. Dadurch bietet die Gebäudewandverstärkung auch im Fugenbereich zwischen den Leichtbauelementen genügend Widerstand gegen Angriffsmittel entsprechend den heutigen Anforderungen.

Bevorzugte Aus- und Weiterbildungen des erfindungsgemässen Leichtbauelements zum Bau einer Gebäudewandverstärkung sowie der Gebäudewandverstärkung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird.

Es zeigt:
- Fig. 1: eine schematische Darstellung eines Leichtbauelements von oben gesehen;
- Fig. 2: eine schematische Darstellung eines Leichtbauelements von vorne gesehen;
- Fig. 3: eine schematische Darstellung eines horizontalen Schnitts durch ein Leichtbauelement;
- Fig. 4: eine schematische Darstellung eines Ausschnitts einer aus Leichtbauelementen zusammengesetzten Wandverstärkung;

In den Figuren sind für dieselben Elemente jeweils dieselben Bezugszeichen verwendet worden und erstmalige Erklärungen betreffen alle Figuren, wenn nicht ausdrücklich anders erwähnt.

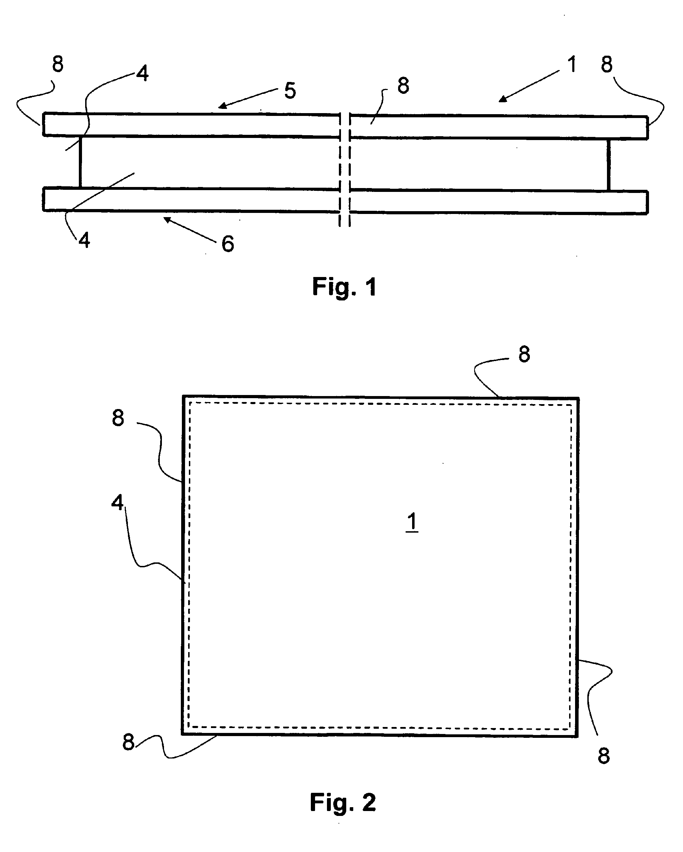

In der Figur 1 ist eine beispielsweise Ausführung des erfindungsgemässen Leichtbauelements 1 von oben gesehen schematisch dargestellt. Abgebildet ist das Leichtbauelement 1 in den beiden seitlichen Endbereichen. Die gestrichelten Linien deuten die Bruchlinie an. Die Baugrösse des vorzugsweise quaderförmigen Leichtbauelements 1 weist eine Breite und Höhe von etwa je 1 m auf und ist etwa 10 cm bis 15 cm dick. Das hier beschriebene Leichtbauelement 1 hat eine Dicke von etwa 12.5 cm. Zu erkennen ist die Vorderseite 5 und die Rückseite 6 der Ummantelung 7 des Leichtbauelements 1, sowie eine in den Seitenflächen 8 eingelassene Nut 4. Die Ummantelung 7 besteht aus einem wetterfesten Material wie zum Beispiel rostfreiem Stahlblech. Die einzelnen Teile wie Deckel und Boden, welche die Vorder- 5 und Rückseite 6 der Ummantelung 7 bilden, sowie die Seitenflächen 8 können untereinander geklebt, geschweisst oder geschraubt sein. Auch Kombinationen davon sind möglich. Der Vorteil einer Stahlblechummantelung 8 liegt neben der Wetterbeständigkeit und Festigkeit auch darin, dass sich die Oberflächen sehr gut reinigen lassen, was bei der Verwendung der Leichtbauelemente in Chemiewerken oder Kernkraftwerken im Falle einer Verschmutzung oder Kontamination von Bedeutung sein kann. Die Füllung des Leichtbauelements 1 im Innern der Ummantelung 7 ist schichtweise aufgebaut und besteht aus wenigstens zwei Schichten aus unterschiedlichen Verbundwerkstoffen, wobei ein erster Verbundwerkstoff ein Holzverbundwerkstoff ist und ein zweiter ein Aluminiumverbundwerkstoff ist. Um einen möglichst grossen Widerstandswert für das Leichtbauelement 1 bei einer vorgegebenen Dicke von etwa 12.5 cm zu erreichen ist es vorteilhaft, mehrere Schichten der verschiedenen Verbundwerkstoffe in abwechselnder Folge und in unterschiedlicher Schichtdicke hintereinander anzuordnen. Zusätzlich kann die Füllung noch ein oder mehrere Stahlplatten, sowie eine Schicht aus reissfesten Fasern (11) beinhalten.

Die Figur 2 zeigt eine schematische Darstellung eines Leichtbauelements 1 von vorne gesehen. Das quaderförmige Leichtbauelement 1 weist eine Vorderfläche 5 von etwa 1 m x 1 m auf. Die in den Seitenflächen eingelassenen Nuten 4 sind gestrichelt gezeichnet.

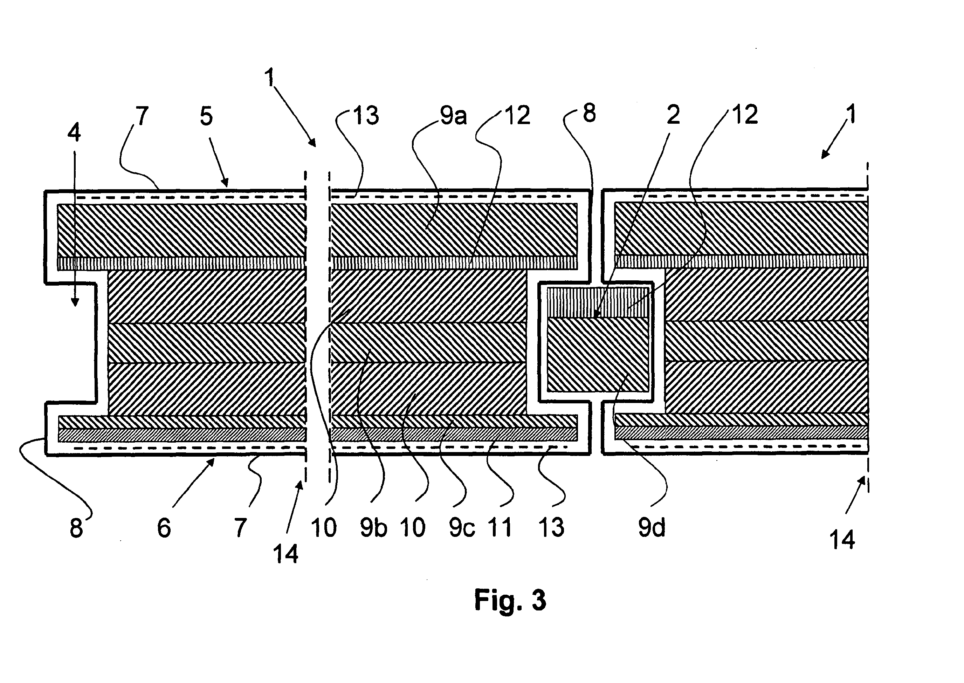

In der Figur 3 ist eine bevorzugte Ausführung des erfindungsgemässen Leichtbauelementes 1 schematisch dargestellt. Die Zeichnung zeigt in einem horizontalen Schnitt zwei benachbarte Leichtbauelemente 1 im Bereich der vertikalen Seitenflächen 8. Die gestrichelten Linien 14 deuten eine Bruchlinie an, das heisst, dass der Mittelteil des Leichtbauelementes 1 nicht dargestellt ist. Die Füllung ist jedoch im Mittelteil des Leichtbauelements 1 gleich aufgebaut, wie in den gezeigten Seitenbereichen des Leichtbauelementes 1. Das Leichtbauelement 1 besteht aus einer mehrteiligen Ummantelung 7 aus rostfreiem Stahlblech. Die Einzelteile der Ummantelung 7 sind teils verschweisst und verschraubt, so dass die Ummantelung 7 eine geschlossene Hülle ergibt. Sowohl in den horizontal wie auch den vertikal verlaufenden Seitenflächen 8 des quaderförmigen Leichtbauelementes sind Nuten 4 eingelassen. Das Leichtbauelement 1 weist eine Element-Vorderseite 5 und eine Element-Rückseite 6 auf. Bei einem an einer Gebäudewand montierten Leichtbauelement 1 ist die Element-Rückwand 6 dem Gebäude zugewandt. Die im Innern der Ummantelung 7 angeordnete Füllung ist sandwichartig in Schichten, die parallel zur Element-Vorderseite 5 und Element-Rückseite 6 verlaufen, aufgebaut. Die vorderste Schicht 9a, jene die der Vorderseite 5 am nächsten liegt, besteht aus einem Holzverbundwerkstoff wie beispielsweise Delignit^{™}, einem schichtverleimten Holzwerkstoff aus Buche dieser Schicht folgt eine Manganstahlplatte 12. Manganstahl ist sehr spröde und zeichnet sich durch eine hohe Widerstandsfähigkeit gegen Bohren aus. Als nächste Schicht folgt eine Aluminium-Verbundwerkstoffplatte 10, wie beispielsweise eine Alucore^{™} Platte. Dieser Werkstoff ist eine Kombination einzelner unabhängiger Aluminium-Folien, die aus einer Ebene zusammenhängender Zellen ähnlich einer Bienenwabe aufgebaut sind, und auf beiden Seiten mit einer Deckschicht aus Aluminium verschlossen sind. Der Vorteil dieser Platten liegt im geringen Gewicht und der hohen Belastbarkeit. Anschliessend folgt eine Schicht aus dem Holzverbundwerkstoff 9b Delignit^{™}, die etwas dünner sein kann als die vorderste Delignit^{™} Platte 9a und danach wieder eine Alucore^{™} Platte. Dieser Platte folgt nochmals eine Delignit^{™} Platte 9c, die nochmals dünner ist als die beiden vordern Delignit^{™} Platten 9a,9b. Die letzte Lage der Füllung bildet eine Schicht aus reissfesten Fasern wie beispielsweise eine aus Aramidfasern 11. Diese organischen Kunststofffasern aus aromatischen Polyamiden sind beispielsweise unter dem Namen Kevlar^{™} bekannt und zeichnen sich durch sehr hohe Festigkeit, einer guten Schwingungsdämpfung sowie einer Beständigkeit gegenüber Säuren und Laugen aus. Darüber hinaus sind diese Fasern hitze- und feuerbeständig. Die Schichten der Füllung sind untereinander unter Druck verklebt und als gesamtes mit einem Drahtgewebe 13 umwickelt. Das Drahtgewebe verhindert, dass die einzelnen Platten, vor allem bei einem Angriff mit Sprengstoff, leicht auseinander gerissen werden können. Bei bündig Seitenfläche 8 an Seitenfläche 8 angeordneten Leichtbauelementen 1 bilden die Nuten 4 Hohlräume, die mit einem Verbindungselement 2 ausgefüllt sind. Dadurch werden die Leichtbauelemente, ähnlich einer Nut-Feder Verbindung, zusammengehalten. Das stabförmige Verbindungselement 2 besteht aus einem Holzverbundwerkstoff, vorzugsweise aus Delignit^{™} und einer Manganstahlplatte 12. Bei einem in die Nuten 4 eingesetzten Verbindungselement 2 weist die Manganstahlplatte 12 gegen die Vorderseite 5 des Leichtbauelements 1 und der Delignit^{™} Teil 9d des Verbindungselementes 2 gegen die Rückseite 6.

Ein wesentlicher Punkt für den Widerstandswert des Leichtbauelements 1 ist die Reihenfolge, in welcher die Schichten 9,10,11,12,13 der einzelnen Materialien angeordnet sind. Es hat sich gezeigt, dass in der beschriebenen Abfolge der Schichten 9a,12,10,9b,10,9c,11,13 der Füllung ein maximaler Widerstandswert bei einer Gesamtdicke von 12.5 cm Leichtbauelementes erreicht wird. Aufgrund der verwendeten Materialien liegt das Flächengewicht des beschriebenen Leichtbauelements 1 unter 150 kg/m².

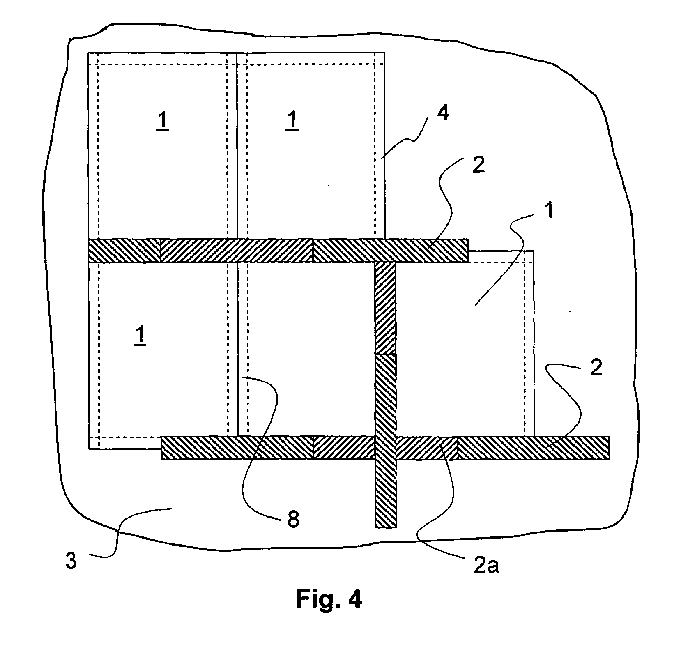

Die Figur 4 zeigt eine schematische Darstellung eines Wandausschnittes 3 mit einer aus Leichtbauelementen 1 zusammengesetzten Wandverstärkung. Die Leichtbauelemente 1 sind bündig Seitenfläche 8 an Seitenfläche 8 angeordnet. Die äussere Form der Leichtbauelemente 1 ist so ausgestaltet, dass sie auf einem am Mauerwerk befestigten Tragrahmen einfach montiert werden können. Der Tragrahmen wird auf das bestehende, zu verstärkende Mauerwerk 3 mit Klebanker oder ähnlichen Befestigungshilfen montiert. Der Tragrahmen kann aus Stahlprofilen wie T-Trägern, Doppel-T-Trägern, Winkeln oder ähnlichen Profilen bestehen. Die Nuten 4 zwischen den Leichtbauelementen 1 sind mit Verbindungselementen 2, 2a unterschiedlicher Länge so ausgefüllt, dass jeweils ein Verbindungselement 2 über einen Kreuzungspunkt hinaus und in die Nuten 4 benachbarter Leichtbauelemente 1 hinein ragt. Zur Veranschaulichung der Anordnung der verschieden langen Verbindungselemente 2,2a sind einige Verbindungselemente 2,2a schraffiert eingezeichnet.

Das erfindungsgemässe Leichbauelement weist den Vorteil auf, dass die bei der Anwendung der erfindungsgemässen Wandverstärkung erforderlichen Modifikationen an einem sensitiven Objekt sehr gering sind. Das Leichtbauelement 1 sowie eine mit dem Leichtbauelement 1 erststellte Wandverstärkung an einer bestehenden Gebäudewand erreicht die geforderten Widerstandswerte, das heisst, dass innerhalb einer bestimmten Widerstandszeit, die mit 15 Minuten definiert ist, keine durchstiegsfähige Öffnung erreicht werden kann. Als durchstiegsfähige Öffnung sind kreisförmige Löcher von etwa 350 mm Durchmesser oder rechteckige Löcher von 400 mm x 250 mm zu verstehen. Insbesondere hält sie Angriffen mit handelsüblichen mechanischen Werkzeugen, thermischen Angriffsmitteln wie Sauerstofflanzen und Sprengstoff stand und erfüllt damit die heutigen Anforderungen.

Das Leichtbauelement 1 kann auch als Verstärkung für mobile Gebäude wie Container oder auch für die Verstärkung von Wänden im Inneren eines Gebäudes verwendet werden.

## Patentansprüche

1. Leichtbauelement (1) zum Bau einer Gebäudewandverstärkung von bestehenden Gebäuden mit einer geschlossenen Ummantelung (7) aus witterungsbeständigem Material und einer Füllung aus wenigstens zwei Schichten (9,10), die aus unterschiedlichen Verbundwerkstoffen gebildet sind, wobei die Schichten (9,10) etwa parallel zur Vorder- (5) und Rückwand (6) des Leichtbauelementes (1) angeordnet sind, und die Seitenwände (8) des Leichtbauelements Nuten (4) aufweisen, **dadurch gekennzeichnet, dass** ein erster Verbundwerkstoff ein Holzverbundwerkstoff (9) ist und ein zweiter ein Aluminiumverbundwerkstoff (10) ist, und dass die Ummantelung (7) aus Stahlblech gefertigt ist.

2. Leichtbauelement nach Anspruch 1, **dadurch gekennzeichnet, dass** die Füllung aus drei Schichten von Holzverbundwerkstoffplatten (10) und aus zwei Schichten aus Aluminiumverbundwerkstoffplatten (9) gebildet ist, und dass die Holzverbundwerkstoffplatten (9) und Aluminium-Verbundwerkstoffplaften (10) in abwechselnder Folge angeordnet sind.

3. Leichtbauelement nach Anspruch 2, **dadurch gekennzeichnet, dass** die Dicke der Schichten wenigstens eines Verbundwerkstoffes (9,10) unterschiedlich sind, wobei die Dicke der Schichten von der Elementvorderseite (5) zur Elementrückseite (6) abnimmt.

4. Leichtbauelement nach einem der vorherigen Ansprüche, **dadurch gekennzeichnet, dass** die Füllung eine parallel zu den Verbundwerkstoffen (9,10) zusätzlich angeordnete Schicht aufweist, die aus reissfesten Fasern (11) gebildet ist.

5. Leichtbauelement nach einem der vorherigen Ansprüche, **dadurch gekennzeichnet, dass** die Füllung wenigstens eine parallel zu den Verbundwerkstoffplatten (9,10) angeordnete Stahlplatte (12) beinhaltet.

6. Leichbauelement nach einem der vorherigen Ansprüche, **dadurch gekennzeichnet, dass** die einzelnen Schichten (9,10,11,12) der Füllung miteinander verklebt und mit einem Drahtgewebe (13) umwickelt sind.

7. Leichbauelement nach Anspruch 1, **dadurch gekennzeichnet, dass** die Ummantelung (7) aus rostfreiem Stahlblech gefertigt ist, wobei die Einzelteile der Ummantelung (7) teils verschweisst und teils verschraubt sind, derart, dass die Ummantelung (7) eine geschlossene, quaderförmigen Hülle bildet, dass weiter die Nuten (4) in den horizontal und den vertikal verlaufenden Seitenflächen (8) des Leichtbauelementes (1) eingelassenen sind, dass die Schichten im Innern der Ummantelung (7) sandwichartig angeordnet sind, wobei die der Vorderseite (5) am nächsten liegende Schicht (9a) aus einem Holzverbundwerkstoff (9a) besteht, dass dieser Schicht eine Manganstahlplatte (12) folgt, dass anschliessend eine Schicht aus einem Aluminium-Verbundwerkstoffplatte (10) folgt, dass anschliessend eine Schicht aus Holzverbundwerkstoff (9b) folgt, die etwas dünner ist als die vorderste Holzverbundwerkstoffplatte (9a), dass danach wieder eine Aluminium-Verbundwerkstoffplatte (10) folgt, dass anschliessend daran nochmals eine Holzverbundwerkstoffplatte (9c) folgt, die dünner ist, als die beiden vordern Holzverbundwerkstoffplatten (9a,9b), und dass weiter eine Schicht aus Aramidfasern (11) folgt, und dass diese Schichten (9a,9b,9c,10,11,12) unter Druck verklebt sind und als gesamtes mit einem Drahtgewebe (13) umwickelt sind.

8. Gebäudewandverstärkung gebildet aus Leichtbauelementen (1) gemäss dem Anspruch 1, **dadurch gekennzeichnet, dass** die Leichtbauelemente (1) bündig Seitenfläche (8) an Seitenfläche (8) mittels eines Tragrahmens an einer Trägerwand befestigt sind, und dass die durch die Nuten (4) gebildeten Hohlräume zwischen zwei benachbarten Leichtbauelementen (1) mit Verbindungselementen (2) bestückt sind, derart dass jeweils ein Verbindungselement (2) über einen Kreuzungspunkt hinaus und in die Nuten (4) benachbarter Leichtbauelemente (1) hinein ragt.

9. Gebäudewandverstärkung nach Anspruch 9, **dadurch gekennzeichnet, dass** die Verbindungselemente (2) aus einem Holzverbundwerkstoff (9d) und einer Stahlplatte gebildet sind.

## Claims

1. A light-weight construction element (1) for building a reinforcement of a wall of existing buildings, comprising an enclosed casing (7) made of weatherproof material and a filling made of at least two layers (9, 10) which are made of different composite materials, with the layers (9, 10) being arranged approximately parallel to the front wall (5) and rear wall (6) of the light-weight construction element (1), and the side walls (8) of the light-weight construction element (1) having grooves (4), **characterized in that** a first composite material is a wood composite material (9) and a second one an aluminium composite material (10), and the casing (7) is made of sheet steel.

2. A light-weight construction element according to claim 1, **characterized in that** the filling is formed by three layers of wood composite panels (10) and of two layers of aluminium composite panels (9), and the wood composite panels (9) and aluminium composite panels (10) are arranged one after the other in an alternating manner.

3. A light-weight construction element according to claim 2, **characterized in that** the thickness of the layers of at least one composite material (9, 10) is different, with the thickness of the layers decreasing from the front side (5) of the element to the rear side (6) of the element.

4. A light-construction element according to one of the preceding claims, **characterized in that** the filling comprises an additionally arranged layer parallel to the composite materials (9, 10) which is made of tear-proof fibers.

5. A light-construction element according to one of the preceding claims, **characterized in that** the filling comprises at least one steel plate (12) arranged parallel to the composite panels (9, 10).

6. A light-construction element according to one of the preceding claims, **characterized in that** the individual layers (9, 10, 11, 12) of the filling are glued together with each other and are wrapped in a wire fabric (13).

7. A light-construction element according to one of the preceding claims, **characterized in that** the casing (7) is made of stainless steel sheet, with the individual parts of the casing (7) being partly welded and partly screwed together in such a way that the casing (7) forms an enclosed cuboid covering, the grooves (4) are further embedded in the horizontally and vertically extending side surfaces (8) of the light-construction element, the layers in the interior of the casing (7) are arranged in a sandwich-like manner, with the layer (9a) closest to the front side (5) consisting of a wood composite material (9a), said layer is followed by a manganese steel plate (12), a layer of an aluminium composite plate (10) subsequently follows, thereafter a layer of a wood composite material (9b) follows which is slightly thinner than the wood composite panel (9a) at the front, thereafter an aluminium composite plate (10) follows, subsequently followed by a wood composite panel (9c) which is thinner than the two front wood composite panels (9a, 9b), and a layer of aramid fibers (11) further follows, and said layers (9a, 9b, 9c, 10, 11, 12) are glued together under pressure and are wrapped in their entirety with a wire fabric (13).

8. A reinforcement of a building wall formed from light-construction elements (1) according to claim 1, **characterized in that** the light-construction elements (1) are fixed in a flush manner side surface (8) to side surface (8) by means of a support frame to a support wall, and the cavities formed by the grooves (4) are provided with connection elements (2) between two adjacent light-construction elements (1) in such a way that one connection element (2) each protrudes beyond a crossing point and into the grooves (4) of adjacent light-construction elements (1).

9. A reinforcement of a building wall according to claim 9, **characterized in that** the connection elements (2) are made of a wood composite material (9d) and a steel plate.

## Revendications

1. Élément de construction léger (1) pour la construction d'un renfort de murs de constructions existantes avec une enveloppe (7) fermée faite de matériau résistant aux intempéries et une garniture faite d'au moins deux couches (9,10) composées de matériaux composites différents, dans lequel les couches (9,10) sont approximativement parallèles aux parois avant (5) et arrière (6) de l'élément de construction léger (1), et les parois latérales (8) de l'élément de construction léger présentent des rainures (4), **caractérisé en ce qu'**un premier matériau composite est un matériau composite à base de bois (9) et un deuxième un matériau composite à base d'aluminium (10) et **en ce que** l'enveloppe (7) se compose de tôle d'acier.

2. Élément de construction léger selon la revendication 1, **caractérisé en ce que** la garniture est faite de trois couches de plaques de matériau composite à base de bois (10) et de deux couches de plaques de matériau composite à base d'aluminium (9), et **en ce que** les plaques de matériau composite à base de bois (9) et les plaques de matériau composite à base d'aluminium (10) sont disposées successivement en alternance.

3. Élément de construction léger selon la revendication 2, **caractérisé en ce que** l'épaisseur des couches d'au moins un matériau composite (9,10) est différente, l'épaisseur des couches diminuant de la face avant (5) de l'élément à la face arrière (6) de l'élément.

4. Élément de construction léger selon l'une des revendications précédentes,
**caractérisé en ce que** la garniture présente une couche supplémentaire disposée parallèlement aux matériaux composites (9,10), qui est formée de fibres résistantes à l'arrachement (11).

5. Élément de construction léger selon l'une des revendications précédentes,
**caractérisé en ce que** la garniture contient au moins une plaque d'acier (12) disposée parallèlement aux plaques de matériau composite (9,10).

6. Élément de construction léger selon l'une des revendications précédentes,
**caractérisé en ce que** les différentes couches (9,10,11,12) de la garniture sont collées entre elles et enveloppées d'un treillis de fils métalliques (13).

7. Élément de construction léger selon la revendication 1, **caractérisé en ce que** l'enveloppe (7) est faite de tôle d'acier inoxydable, les différentes parties de l'enveloppe (7) étant en partie soudées et en partie vissées, de telle sorte que l'enveloppe (7) forme une coque quadrangulaire fermée, **en ce que** les rainures (4) sont formées dans les faces latérales (8) horizontales et verticales de l'élément de construction léger (1), **en ce que** les couches sont disposées en sandwich à l'intérieur de l'enveloppe (7), la couche (9a) la plus proche de la face avant (5) étant faite d'un matériau composite à base de bois (9a), **en ce que** cette couche est suivie d'une plaque d'acier au manganèse (12), **en ce qu'**une couche d'une plaque de matériau composite à base d'aluminium (10) fait suite à celle-ci, **en ce qu'**une couche de matériau composite à base de bois (9b) un peu plus mince que la plaque de matériau composite à base de bois (9a) précédente fait suite à celle-ci, **en ce qu'**une nouvelle plaque de matériau composite à base d'aluminium (10) fait suite à celle-ci, **en ce qu'**une nouvelle plaque de matériau composite à base de bois (9c) plus mince que les deux plaques de matériau composite à base de bois (9a,9b) précédentes fait suite à celle-ci, et **en ce qu'**une couche de fibres d'aramide (11) fait suite à celle-ci, et **en ce que** ces couches (9a,9b,9c,10,11,12) sont collées sous pression et sont enveloppées ensemble dans un treillis de fils métalliques (13).

8. Renfort pour mur de construction formé d'éléments de construction légers (1) selon la revendication 1, **caractérisé en ce que** les éléments de construction légers (1) sont fixés en affleurement face latérale (8) sur face latérale (8) sur un mur porteur au moyen d'un cadre de support, et **en ce que** les cavités formées par les rainures (4) entre deux éléments de construction légers (1) voisins sont garnies d'éléments de liaison (2), de sorte qu'un élément de liaison (2) dépasse au-delà d'un point de croisement et dans les éléments de construction légers (1) voisins des rainures (4).

9. Renfort pour mur de construction selon la revendication 9, **caractérisé en ce que** les éléments de liaison (2) sont formés d'un matériau composite à base de bois (9d) et d'une plaque d'acier.
